(19) Europäisches Patentamt

European Patent Office

Office européen des brevets

(11) **EP 0 810 269 B1**

(12) **EUROPÄISCHE PATENTSCHRIFT**

(45) Veröffentlichungstag und Bekanntmachung des Hinweises auf die Patenterteilung:
**03.09.2003  Patentblatt 2003/36**

(51) Int Cl.[7]: **C09C 1/00**, C08K 3/00, C09C 3/06, C08K 9/02

(21) Anmeldenummer: **97810315.8**

(22) Anmeldetag: **22.05.1997**

(54) **Transparente Bismuthvanadat-Pigmente**

Transparent bismuth vanadate pigments

Pigments de vanadate de bismuth transparents

(84) Benannte Vertragsstaaten:
**CH DE FR GB IT LI**

(30) Priorität: **31.05.1996  CH 137096**

(43) Veröffentlichungstag der Anmeldung:
**03.12.1997  Patentblatt 1997/49**

(73) Patentinhaber: **Ciba Specialty Chemicals Holding Inc.**
**4057 Basel (CH)**

(72) Erfinder:
 • **Erkens, Leonardus Johannes Hubertus**
**6213 CK Maastricht (NL)**
 • **Schmitt, Gregor**
**6372 NE Landgraaf (NL)**
 • **Hamers, Hendrikus Maria Anna**
**52538 Selfkant (DE)**
 • **Luijten, Johannes Maria Martinus**
**6351 CL Bocholtz (NL)**
 • **Mains, Jozef Gertruda Emanuel**
**6118 BV Nieuwstadt (NL)**

(56) Entgegenhaltungen:
EP-A- 0 074 049     EP-A- 0 239 526
EP-A- 0 430 888     EP-A- 0 640 566
EP-A- 0 723 998     GB-A- 2 238 549
US-A- 4 063 956

 • DATABASE WPI Week 9346 Derwent Publications Ltd., London, GB; AN 93-365426 XP002066367 & JP 05 271 568 A (DAINICHISEIKA COLOR & CHEM. MFG. AND UKIMA GOSEI KAGAKU KK) , 19.Oktober 1993

**Beschreibung**

Die vorliegende Anmeldung betrifft transparente Bismuthvanadat-Pigmente und ihre Herstellung.

Bei den zur Erzielung eines transparenten gelben Farbtones in der Lack-, Kunststoff- und Druckfarbenindustrie eingesetzten Pigmenten handelt es sich, mit Ausnahme von transparentem gelbem Eisenoxid, um organische Pigmente. Die seit langem, z.B. aus den US-Patenten 3 843 554 und 4 115 142, bekannten Bismuthvanadat-Pigmente, die insbesondere wegen ihrer geringen Toxizität und ihrer hohen Farbsättigung und Echtheitseigenschaften sehr geschätzt werden, existierten bislang nur als hochdeckende Varianten. Deshalb ist der Einsatz der nach bisher bekannten Methoden hergestellten Bismuthvanadat-Pigmenten auf deckende Einfärbungen beschränkt.

Um die obenerwähnten Vorteile der Bismuthvanadat-Pigmente auch für die heutzutage stark aufkommenden transparenten Applikationen zu nützen, war es wünschenswert, diese auch in einer transparenten Variante herstellen zu können.

Aus der einschlägigen Literatur sind unzählige Herstellungsmethoden für verschieden artige Bismuthvanadat-Pigmente bekannt. Alle führen zu opaken Formen. Im allgemeinen wird durch Vermischen von bismuth- und vanadium haltiger Lösungen in Gegenwart löslicher Metallsalze und gegebenenfalls löslicher Phosphate, Sulfate und/oder Silikate der amorphe Pigmentvorläufer ausgefällt, der nachträglich durch Calcinieren in die pigmentäre Form überführt wird. Verfahren dieser Art sind z.B. in US 5 536 309, US 4 115 142, US 4 272 296, US 4 316 746, US 4 455 174, US 4 752 460, US 5 203 917, US 5 336 312, US 5 399 197 und EP 441 101 beschrieben.

Es ist nun gefunden worden, dass durch Beschichtung eines nach üblichen Methoden, wie sie beispielsweise in den eben erwähnten Publikationen beschrieben sind, hergestellten Pigmentvorläufers mit einem für die Beschichtung von Pigmenten üblichen Beschichtungsmaterial und anschliessender Calcinierung, ganz überraschend transparente Bismuthvanadat-Pigmente entstehen, mit ansonsten guten Pigmenteigenschaften.

Die vorliegende Erfindung betrifft demnach ein Verfahren zur Herstellung von transparenten Bismuthvanadat-Pigmenten, dadurch gekennzeichnet, dass

a) ein amorpher Pigmentvorläufer nach allgemein üblichen Methoden durch Ausfällung aus einer sauren Bismuthsalzlösung und einer Vanadatlösung, welche gelöste Metallsalze, Metalloxide oder Nichtmetalloxide enthalten können, hergestellt wird,
b) der so erhaltene amorphe Pigmentvorläufer mit 1 bis 50 Gew.%, bezogen auf die Gesamtmenge, eines für die Beschichtung von Pigmenten üblichen anorganischen Beschichtungsmaterials, ausgewählt aus der Gruppe bestehend aus Phosphaten und Pyrophosphaten, Hydroxide, Oxiden und wasserhaltigen Oxiden, sowie Carbonaten, Nitraten, Fluoriden, Fluorosilicaten, Molybdaten und Sulfaten oder Mischungen derselben, vorzugsweise bei einem pH zwischen 1 und 11, überzogen und dann
c) bei Temperaturen von 50 bis 800°C nach allgemein bekannten Methoden thermisch behandelt und anschliessend desagglomeriert wird.

Die Möglichkeiten der Herstellung verschiedenartiger amorpher Pigmentvorläufer gemäss (a) ist allgemein bekannt und z.B. in den obenerwähnten Patentpublikationen beschrieben. So handelt es sich z.B. bei der sauren Bismuthsalzlösung um eine wässrige salpetersaure Lösung von Bismuth(III)-acetat oder bevorzugt Bi(III)-nitrat und bei der Vanadatlösung z.B. um eine Lösung von $NaVO_3$, $NH_4VO_3$, $Na_3VO_4$ oder $V_2O_5$ in Natronlauge oder Kalilauge. Es ist von Vorteil den Pigmentvorläufer während oder nach der Fällung in der Reaktionslösung, vor dem Beschichtungsvorgang (b), in einer üblichen Dispergierapparatur gründlich zu dispergieren.

Bei den unter (a) erzeugten Pigmentvorläufern handelt es sich vorzugsweise um Pigmentvorläufer der als C.I. Pigment Yellow 184 bezeichneten handelsüblichen Bismuthvanadat-Pigmente (vgl. The Bulletin of the Bismuth Institute 68, 1995).

Die Beschichtung gemäss (b) erfolgt vorzugsweise mit 10 bis 30 Gew.% Beschichtungsmaterial, bezogen auf die Gesamtmenge.

Geeignete Beschichtungsmaterialien sind anorganische Verbindungen, wie z.B.

Phosphate und Pyrophosphate von Zink, Aluminium, Calcium, Magnesium, Bismuth, Eisen oder Chrom, wie z.B. Zinkphosphat $[Zn_3(PO_4)_2]$, Aluminiumphosphat $[AlPO_4]$, Calciumphosphat $[Ca_3(PO_4)_2]$, Calciumpyrophosphat $[Ca_2P_2O_7]$, Magnesiumphosphat $[Mg_3(PO_4)_2]$, Bismuthphosphat $[BiPO_4]$, Eisen(II)-phosphat $[Fe_3(PO_4)_2]$, Eisen(III)-phosphat $[FePO_4]$, Chrom(III)-phosphat $[CrPO_4]$, sowie Calcium-Salze von Oligophosphaten, wie z.B. das Calcium-Salz des Graham'schen Salzes, oder eine Mischung von Phosphaten;

Hydroxide, wie z.B. Aluminiumhydroxid $[Al(OH)_3]$, Zinkhydroxid $[Zn(OH)_2]$, Eisen(II)-hydroxid $[Fe(OH)_2]$, Eisen(III)-hydroxid $[Fe(OH)_3]$, Strontiumhydroxid $[Sr(OH)_2]$, Calciumhydroxid $[Ca(OH)_2]$, Bismuthhydroxid $[Bi(OH)_3]$, Bariumhydroxid $[Ba(OH)_2]$, Chrom(III)-hydroxid $[Cr(OH)_3]$, Vanadium(IV)-hydroxid $[V(OH)_4]$, Cobalt(II)-hydroxid $[Co(OH)_2]$, Manganhydroxid $[Mn(OH)_2]$ oder eine Mischung von Hydroxiden;

Oxide oder wasserhaltige Oxide, wie z.B. Zinn(II)-oxidhydrat $[SnO•xH_2O]$, Zinn(IV)-oxidhydrat $[SnO_2•xH_2O]$, Titandioxidhydrat $[TiO_2•xH_2O]$, Zirkondioxidhydrat $[ZrO_2•xH_2O]$, Cer(III)-oxidhydrat $[Ce_2O_3•xH_2O]$, Cer(IV)-oxidhydrat $[CeO_2•xH_2O]$, Siliciumdioxid $[SiO_2]$, Antimon(III)-oxidhydrat $[Sb_2O_3•xH_2O]$, Antimon(V)-oxidhydrat $[Sb_2O_5•xH_2O]$ oder eine Mi-

schung von Oxiden bzw. wasserhaltigen Oxiden.

Ebenfalls geeignet sind Carbonate, Nitrate, Fluoride, Fluoro silicate, Molybdate, Wolframate und insbesondere Sulfate, wie z.B. Calciumcarbonat [$CaCO_3$], Magnesiumcarbonat [$MgCO_3$], Bismuthoxinitrat [$BiO(NO_3)$], Bismuthoxifluorid [$BiOF$], Calciumhexafluorosilicat [$CaSiF_6$], Calciummolybdat [$CaMoO_4$], Calciumsulfat [$CaSO_4$] oder Mischungen davon.

Weiterhin sind alle Kombinationen von Phosphaten, Hydroxiden, Oxiden bzw. wasserhaltigen Oxiden und Salzen möglich, die sich durch Auffällen auf amorphen Pigmentvorläufer aufbringen lassen.

Bevorzugt werden die Hydroxyde und insbesondere die Phosphate von Zink und Aluminium. Besonders bevorzugt ist ein Gemisch von Zink- und Aluminium phosphat.

Das Beschichtungsmittel wird zweckmässig in wässriger Lösung der Pigmentvorläufersuspension zudosiert und gegebenenfalls durch Zugabe einer Säure oder Base ein vom verwendetem Beschichtungsmaterial abhängiger pH eingestellt, wobei es vorteilhaft ist, das anfallende Produkt während oder nach der Zugabe des Beschichtungsmittels, vor der thermischen Behandlung, in einer üblichen Dispergierapparatur, z.B. einem Hochdruckhomogenisator oder einem Hochgeschwindigkeits rührer, gründlich zu dispergieren.

Geeignete Säuren sind z.B. Phosphorsäure und Essigsäure und insbesondere Salpetersäure. Als Basen können zweckmässig wässrige Alkalihydroxyd lösungen bzw. Ammoniaklösungen verwendet werden, vorzugsweise wässrige Natronlauge. Der pH ist für die Beschichtung wichtig, damit die Beschichtungs materialien ausfallen. Bei Phosphaten sind pH-Werte zwischen 5 und 10, bevorzugt, zwischen 5 und 7 zweckmässig. Bei Hydroxyden ist ein pH-Bereich zwischen 1 (Bismuthhydroxid) und 11 (Calcium- und Bariumhydroxyd) einsetzbar; die bevorzugten Aluminium- und Zinkhydroxyd fallen jedoch im Bereich zwischen 4 und 8 aus. Die meisten Oxide bzw. wasserhaltigen Oxide werden bei pH-Werten zwischen 2 und 4 ausgefällt. Höhere pH-Werte bis zu 10 haben aber keinen negativen Einfluss. Siliciumoxid fällt in einem pH-Bereich von 2-9, vorzugsweise 6-9 aus. Die weiteren aufgeführten Salze fallen in einem pH-Bereich zwischen 1(Bismuthoxinitrat) und 8 (Calciummolybdat) aus.

Die thermische Behandlung (c) (Calcinierung) wird nach üblichen Methoden vorzugsweise zwischen 100 und 600 °C, besonders bevorzugt zwischen 300 und 450 °C und insbesondere bei 400°C durchgeführt.

Nach der Calcinierung kann die Beschichtung, wenn für die vorgesehene Verwendung zweckmässig, durch Behandlung mit einer Säure oder Base entfernt werden und gegebenenfalls mit anderen üblichen Beschichtungs mitteln ersetzt werden, ohne Beeinträchtigung der Transparenz. Geeignete Säuren und Basen sind z.B. die gleichen, die oben bereits im Zusammenhang mit der pH-Einstellung erwähnt wurden.

Die durch das erfindungsgemässe Verfahren erhaltenen Produkte sind, wie bereits erwähnt, durch eine bei Bismuthvanadat-Pigmenten bisher nie erlangten Transparenz gekennzeichnet. Sie sind demnach neu und bilden einen weiteren Gegenstand der vorliegenden Anmeldung.

Die Transparenz wird hier durch $\Delta L^*$ gemäss CIELAB gekennzeichnet und zwar mit $\Delta L^*>4$, wobei

$$\Delta L^* = L^* \text{ (weiss) - } L^* \text{ (schwarz)}$$

ist.

$L^*$ (weiss) bzw. $L^*$ (schwarz) werden durch Farbmessung einer Alkyd-Melamin Lack applikation bei einem Pigmentanteil (Festkörpergehalt) von 38 %, mit einer Schichtdicke (trocken) von 40 µm auf einem Schwarz-Weiss-Kontrastkarton und Berechnung nach der CIELAB-Formel (ISO 7724-1 bis 7724-3) ermittelt.

Die vorliegende Erfindung betrifft demnach auch Bismuth vanadat-Pigmente der allgemeinen Zusammensetzung

$$Bi_2O_3 \text{ x } V_2O_5,$$

wobei Bismuth und Vanadium teilweise durch andere Metalle oder Nichtmetalle ersetzt sein können, erhältlich nach dem vorstehend beschriebenen Verfahren, dadurch gekennzeichnet, dass sie eine Transparenz von $\Delta L^*>4$ in einer Alkyd-Melamin-Lackapplikation bei einem Pigmentanteil von 38 %, mit einer Schichtdicke, trocken, von 40 µm aufweisen.

Bei den Metallen und Nichtmetallen, die Bismuth und Vanadium teilweise ersetzten können, handelt es sich vorzugsweise um Li, Mg, Zn, Al und insbesondere Ca, sowie W und insbesondere P und Mo.

Bevorzugt handelt es sich um Bismuth vanadat-Pigmente auf Basis der oben bereits erwähnten C. I. Pigment Yellow 184-Typen.

Die erfindungsgemässen transparenten Bismuthvanadate können als Pigmente für hochmolekulare organische Materialien verwendet werden.

Hochmolekulare organische Materialien, die mit den erfindungsgemässen Bismuthvanadaten pigmentiert werden können, sind z.B. Cellulose ether und -ester, wie Ethylcellulose, Nitrocellulose, Celluloseacetat und Cellulosebutyrat, natürliche Harze und Kunstharze, wie Polymerisationsharze oder Kondensationsharze, z.B. Aminoplaste, insbesondere Harnstoff- und Melamin-Formaldehydharze, Alkydharze, Phenoplaste, Polycarbonate, Polyolefine, wie Polyethylen und Polypropylen, Polystyrol, Polyvinylchlorid, Polyacrylnitril, Polyacrylsäureester, Polyamide, Polyurethane, Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungs zweck erweist es sich als vorteilhaft, die erfindungsgemässen Bismuth vanadate als Toner oder in Form von Präparaten einzusetzen. Bezogen auf das zu pigmentierende hochmolekulare organische Material kann man die erfindungsgemässen Bismuthvanadate in einer Menge von 0,01 bis 75 Gew.-%, vorzugsweise 0,1 bis 50 Gew.-%, einsetzen.

Die erhaltenen Ausfärbungen, beispielsweise in Kunststoffen, Fasern, Lacken oder Drucken zeichnen sich, ausser durch die ausserordentlich hohe Farbton-Reinheit und Transparenz durch hohe Farbstärke, gute Dispergierbarkeit, gute Überlackier-, Migrations-, Hitze-, Lichtund Wetterbeständigkeit, sowie durch einen guten Glanz, aus.

Die erfindungsgemässen Bismuthvanadate zeichnen sich aber, wie bereits erwähnt, ganz besonders durch ihre hohe Transparenz aus. Demnach eignen sie sich vorzugsweise zum Färben von Kunststoffen, Druckfarben und wässrigen und/oder lösungsmittel haltigen Lacken, insbesondere Automobillacken. Ganz besonders bevorzugt ist ihre Verwendung für Metalleffektlackierungen (Metall oder Mica).

Die nachfolgenden Beispiele dienen zur Erläuterung der Erfindung. Sofern nichts anderes vermerkt, bedeuten Prozente Gewichtsprozente.

Beispiel 1: 98,4 g Bismuthnitratpentahydrat und 6,4 g Calciumnitrattetrahydrat werden unter Rühren in 74,4 g Salpetersäure (54%-ig) und 580 ml Wasser gelöst. Die erhaltene Lösung wird innerhalb von 3 Minuten unter intensivem Rühren mit einer Vanadat lösung, bestehend aus 35,4 g Natriumorthovanadat, 4,0 g Natriumhydroxid und 6,6 g Natriummolybdatdihydrat in 600 ml Wasser, versetzt. Der pH der entstandenen Suspension wird inner halb von einigen Minuten durch Zugabe von 20 %-iger Natronlauge auf einen Wert von 3,5 angehoben. Nach einer Rührzeit von 60 Minuten erhöht man durch Zugabe von 1 molarer Natronlauge den pH der Suspension innerhalb von 20 Minuten auf einen Wert von 6,5 und lässt weitere 30 Minuten rühren. Zu dieser Suspension gibt man in 20 Minuten eine Lösung aus 39,0 g Phosphorsäure (75%-ig), 53,0 g Aluminiumsulfathydrat und 44,0 g Zinksulfatheptahydrat aufgelöst in 300 ml Wasser, worauf der pH-Wert sinkt. Wird ein p H-Wert von 2,0 unterschritten, wird 20%-ige Natronlauge zudosiert. Der pH der Suspension wird dann in 60 Minuten mit 1 molarer Natronlauge auf einen Wert von 6,5 eingestellt und weitere 30 Minuten gerührt. Nach Filtration, zweimaligem Waschen mit 500 ml Wasser und trocknen bei 100°C wird der erhaltene Feststoff 20 Stunden bei 400°C geglüht. Nach Abkühlen des Glühproduktes wird es in einer Pulver-Mühle desagglomeriert.

Das erhaltene Pigment wird in einem AM-Lack nach folgender Vorgehensweise appliziert:

37,0 g eines Alkydmelamin-Lackes der folgenden Zusammensetzung

18,7 g eines kurzkettigen Alkydharzes (Setal® 84xx70 (70 %) der Firma Synthese)

7,2 g eines Melaminharzes (Setamin® US 132 BB70 (70 %) der Firma Synthese)

7,8 g Solvesso® 100 (aromatische Kohlenwasserstoffe; Esso)

1,7 g Butanol

0,8 g Depanol J (Terpen-Kohlenwasserstoff)

0,8 g Isophoron

werden zusammen mit 11,0 g des unter Beispiel 1 hergestellten Pigments und 40 g Glaskugeln (Durchmesser 3 mm) in einem 100 ml Glasgefäss mit Schraubdeckelverschluss gegeben und auf einer Scandex-Apparatur dispergiert bis eine Feinheit von <10 μ (Hegman-Gauge) erreicht ist.

Der Lack wird auf einem Kontrastkarton ausgezogen (Nassfilmdicke 75 μm), 20 Minuten abgelüftet und während 30 Minuten bei 130°C eingebrannt.

Farbmessungen nach der CIELAB-Methode (ISO 7724-1 bis 7724-3) ergeben folgende Werte: $\Delta L^* = 11,2$; $\Delta E^* = 25,0$

Beispiel 2: 98,4 g Bismuthnitratpentahydrat und 6,4 g Calciumnitrattetrahydrat werden unter Rühren in 74,4 g Salpetersäure (54%-ig) und 580 ml Wasser gelöst. Die erhaltene Lösung wird innerhalb von 3 Minuten unter intensivem Rühren mit einer Vanadat lösung, bestehend aus 35,4 g Natriumorthovanadat, 4,0 g Natriumhydroxid und 6,6 g Natriummolybdatdihydrat in 600 ml Wasser, versetzt. Der pH der entstandenen Suspension wird innerhalb von einigen Minuten durch Zugabe von 20 %-iger Natronlauge auf einen Wert von 3,5 angehoben. Nach einer Rührzeit von 60 Minuten erhöht man durch Zugabe von 1 molarer Natronlauge den pH der Suspension innerhalb von 20 Minuten auf einen Wert von 6,5 und lässt weitere 30 Minuten rühren. Zu dieser Suspension gibt man in 5 Minuten eine Lösung aus 9,8 g Phosphorsäure (75%-ig), 13,3 g Aluminiumsulfathydrat und 11,0 g Zinksulfatheptahydrat aufgelöst in 300 ml Wasser, worauf sich ein pH-Wert von 1,2 einstellt. Der pH der Suspension wird dann in 90 Minuten mit 1 molarer Natronlauge auf einen Wert von 6,5 eingestellt und weitere 30 Minuten gerührt. Nach Filtration, einmaligem Waschen mit 500 ml Wasser und trocknen bei 100 °C wird der erhaltene Feststoff 20 Stunden bei 400°C geglüht. Nach Abkühlen des Glühproduktes wird es in einer Pulver-Mühle desagglomeriert.

Das erhaltene Pigment wird, wie in Beispiel 1 beschrieben, in einem AM-Lack appliziert und einer Farbmessung unterzogen. Man erhält folgende Werte: $\Delta L^* = 8,1$; $\Delta E^* = 19,7$.

Beispiel 3: 239,0 g Bismuthnitratpentahydrat und 12,8 g Calciumnitrattetrahydrat werden unter Rühren in 140,0 g Salpetersäure (54%-ig) und 1150,0 ml Wasser gelöst. Die erhaltene Lösung wird innerhalb von 1 Minute unter intensivem Rühren mit einer Vanadatlösung, bestehend aus 70,8 g Natriumorthovanadat, 7,9 g Natriumhydroxid und 13,2 g Natriummolybdatdihydrat in 700 ml Wasser, versetzt. Der pH der entstandenen Suspension wird innerhalb von einigen Minuten durch Zugabe von 20 %-iger Natronlauge auf einen Wert von 3,5 angehoben. Nach einer Rührzeit von 60 Minuten erhöht man durch Zugabe von 1 molarer Natronlauge den pH der Suspension innerhalb von 20 Minuten auf einen Wert von 6,5 und lässt weitere 30 Minuten rühren. Zu dieser Suspension gibt man in 5 Minuten eine Lösung aus 39,0 g Phosphorsäure (75%-ig), 53,0 g Aluminiumsulfathydrat und 44,0 g Zinksulfatheptahydrat aufgelöst in 200 ml Wasser, worauf sich ein pH-Wert von 1,0 einstellt. Der pH der Suspension wird dann in 10 Minuten mit 50%-iger Natronlauge auf einen Wert von 6,5 eingestellt und weitere 30 Minuten gerührt. Nach Filtration, einmaligem Waschen mit 500 ml Wasser und trocknen bei 100 °C wird der erhaltene Feststoff 16 Stunden bei 400°C geglüht. Nach Abkühlen des Glühproduktes wird es in 2 Wasser erneut angeschlämmt und mittels einem Hochgeschwindigkeitsrührer 10 Minuten desagglomeriert. Zu dieser Suspension gibt man in 5 Minuten eine Lösung aus 35,0 g Phosphorsäure (75%-ig), 53,0 g Aluminiumsulfathydrat und 44,0 g Zinksulfatheptahydrat aufgelöst in 1200 ml Wasser worauf sich ein pH-Wert von 2,0 einstellt. Der pH der Suspension wird dann in 10 Minuten mit 20%-iger Natronlauge auf einen Wert von 6,5 eingestellt und weitere 30 Minuten gerührt. Nach Filtration, einmaligem Waschen mit 500 ml Wasser und trocknen bei 100°C wird der erhaltene Feststoff 16 Stunden bei 400 °C geglüht. Nach Abkühlen des Glühproduktes wird es in einer Pulver-Mühle desagglomeriert.

Das erhaltene Pigment wird, wie in Beispiel 1 beschrieben, in einem AM-Lack appliziert und einer Farbmessung unterzogen. Man erhält folgende Werte: $\Delta L^* = 9,2$; $\Delta E^* = 20,7$.

Beispiel 4: 98,4 g Bismuthnitratpentahydrat und 6,4 g Calciumnitrattetrahydrat werden unter Rühren in 74,4 g Salpetersäure (54%-ig) und 580 ml Wasser gelöst. Die erhaltene Lösung wird innerhalb von 3 Minuten unter intensivem Rühren mit einer Vanadat lösung, bestehend aus 35,4 g Natriumorthovanadat, 4,0 g Natriumhydroxid und 6,6 g Natriummolybdatdihydrat in 600 ml Wasser, versetzt. Der pH der entstandenen Suspension wird innerhalb von einigen Minuten durch Zugabe von 20 %-iger Natronlauge auf einen Wert von 3,5 angehoben. Nach einer Rührzeit von 30 Minuten erhöht man durch Zugabe von 20%-iger Natronlauge den pH der Suspension innerhalb von 60 Minuten auf einen Wert von 6,5 und lässt weitere 30 Minuten rühren. Zu dieser Suspension gibt man in 10 Minuten eine Lösung aus 53,0 g Aluminiumsulfathydrat und 44,0 g Zinksulfatheptahydrat aufgelöst in 600 ml Wasser, worauf sich ein pH-Wert von 3,1 ein stellt. Der pH der Suspension wird dann in 120 Minuten mit 1 molarer Natronlauge auf einen Wert von 6,5 eingestellt und weitere 30 Minuten gerührt. Nach Filtration, dreimaligem Waschen mit 500 ml Wasser und trocknen bei 100°C wird der erhaltene Feststoff 24 Stunden bei 400°C geglüht. Nach Abkühlen des Glühproduktes wird es in einer Pulver-Mühle desagglomeriert.

Das erhaltene Pigment wird, wie in Beispiel 1 beschrieben, in einem AM-Lack appliziert und einer Farbmessung unterzogen. Man erhält folgende Werte: $\Delta L^* = 6,0$, $\Delta E^* = 15,2$.

Beispiel 5: 123,6 g Bismuthnitratpentahydrat werden unter Rühren in 53,0 g Salpetersäure (54%-ig) und 570 ml Wasser gelöst. Die erhaltene Lösung wird innerhalb von 3 Minuten unter intensivem Rühren mit einer Vanadat lösung, bestehend aus 48,9 g Natriumorthovanadat, 5,5 g Natriumhydroxid in 600 ml Wasser, versetzt. Der pH der entstandenen Suspension wird innerhalb von einigen Minuten durch Zugabe von 20 %-iger Natronlauge auf einen Wert von 3,5 angehoben. Nach einer Rührzeit von 30 Minuten erhöht man durch Zugabe von 20%-iger Natronlauge den pH der Suspension innerhalb von 60 Minuten auf einen Wert von 6,5 und lässt weitere 16 Stunden rühren. Zu dieser Suspension gibt man 1 g Natriumhexamethaphosphat und dispergiert 6 Minuten mittels eines Hochgeschwindigkeitsrührers. Nach der Dispergierung gibt man zu dieser Suspension in 10 Minuten eine Lösung aus 66,5 g Aluminiumsulfathydrat und 55,0 g Zinksulfatheptahydrat und 49,0 g Phosphorsäure (75%-ig) aufgelöst in 600 ml Wasser, worauf sich ein pH-Wert von 1,9 einstellt Der pH der Suspension wird dann in 30 Minuten mit 20%-iger Natronlauge auf einen Wert von 6,5 eingestellt und weitere 30 Minuten gerührt. Nach Filtration, zweimaligem waschen mit 500 ml Wasser und trocknen bei 100 °C wird der erhaltene Feststoff 24 Stunden bei 400 °C geglüht. Nach Abkühlen des Glühproduktes wird es in einer Pulver-Mühle desagglomeriert. 50 g des erhaltenen Pigments werden in 2,0 l Wasser und 5,0 g Natriumhexametaphosphat 20 Minuten bei 100°C mittels eines Hochgeschwindigkeitsrührers redispergiert. Zu der erhaltenen Suspension gibt man in 10 Minuten eine Lösung aus 7,6 g Cerium(III)-chlorid in 250 ml Wasser worauf sich ein pH von 4,1 einstellt. Der pH der Suspension wird in 15 Minuten mit 1 molarer Natronlauge auf einen Wert von 10,0 erhöht und lässt 30 Minuten weiter rühren. Nach Filtration, zweimaligem Waschen mit 500 ml Wasser und trocknen bei 100 °C wird der erhaltene Feststoff 16 Stunden bei 400°C geglüht Nach Abkühlen des Glühproduktes wird es in einer Pulver-Mühle desagglomeriert.

Das erhaltene Pigment wird, wie in Beispiel 1 beschrieben, in einem AM-Lack appliziert und einer Farbmessung unterzogen. Man erhält folgende Werte: $\Delta L^* = 7,9$; $\Delta E^* = 19,5$.

**Patentansprüche**

1. Verfahren zur Herstellung von transparenten Bismuth vanadat-Pigmenten, **dadurch gekennzeichnet, dass**

a) ein amorpher Pigmentvorläufer nach allgemein üblichen Methoden durch Ausfällung aus einer sauren Bismuthsalzlösung und einer Vanadat lösung, welche gelöste Metallsalze, Metalloxide oder Nichtmetalloxide enthalten können, hergestellt wird,

b) der so erhaltene amorphe Pigmentvorläufer mit 1 bis 50 Gew.%, bezogen auf die Gesamtmenge, eines für die Beschichtung von Pigmenten üblichen anorganischen Beschichtungsmaterials ausgewählt aus der Gruppe bestehend aus Phosphaten und Pyrophosphaten, Hydroxiden, Oxiden und wasserhaltigen Oxiden, sowie Carbonaten, Nitraten, Fluoriden, Fluorosilicaten, Molybdaten und Sulfaten oder Mischungen derselben, überzogen und dann

c) bei Temperaturen von 50 bis 800 °C nach allgemein bekannten Methoden thermisch behandelt und anschliessend desagglomeriert wird.

**2.** Verfahren gemäss Anspruch 1, **dadurch gekennzeichnet, dass** die Beschichtung (b) mit 10 bis 30 Gew.-% Beschichtungsmaterial, bezogen auf die Gesamtmenge, erfolgt.

**3.** Verfahren gemäss Anspruch 1, **dadurch gekennzeichnet, dass** Hydroxyde oder Phosphate von Zink oder Aluminium oder Mischungen davon verwendet werden.

**4.** Verfahren gemäss Anspruch 3, **dadurch gekennzeichnet, dass** Phosphate von Zink oder Aluminium oder Mischungen davon verwendet werden.

**5.** Verfahren gemäss Anspruch 1, **dadurch gekennzeichnet**, das der Pigmentvorläufer während oder nach der Fällung in der Reaktionslösung, vor dem Beschichtungsvorgang (b) in einer üblichen Dispergierapparatur gründlich dispergiert wird.

**6.** Verfahren gemäss Anspruch 1, **dadurch gekennzeichnet, dass** das im Beschichtungsvorgang (b) anfallende Produkt während oder nach der Zugabe des Beschichtungsmittels, vor der thermischen Behandlung, in einer üblichen Dispergier apparatur gründlich dispergiert wird.

**7.** Verfahren gemäss Anspruch 1, **dadurch gekennzeichnet, dass** die Beschichtung nach der Calcinierung (c) durch Behandlung mit einer Säure oder Base, entfernt wird.

**8.** Bismuthvanadat-Pigmente der allgemeinen Zusammensetzung

$$Bi_2O_3 \times V_2O_5,$$

wobei Bismuth und Vanadium teilweise durch andere Metalle oder Nichtmetalle ersetzt sein können, erhältlich nach dem Verfahren gemäß einem der Ansprüche 1 bis 7 **dadurch gekennzeichnet, dass** sie eine Transparenz von $\Delta L^*>4$ in einer Alkyd-Melamin-Lackapplikation bei einem Pigmentanteil von 38 %, mit einer Schichtdicke, trocken, von 40 μm aufweisen.

**9.** Bismuthvanadat-Pigmente gemäss Anspruch 8, **dadurch gekennzeichnet, dass** es sich bei den Metallen und Nichtmetallen, die Bismuth und Vanadium teilweise ersetzen können, um Li, Mg, Zn, Al und Ca, sowie W, P und Mo handelt.

**10.** Bismuthvanadat-Pigmente gemäss Anspruch 8, **dadurch gekennzeichnet, dass** es sich um Bismuthvanadate auf Basis der C.I. Pigment Yellow 184-Typen handelt.

**11.** Mit Bismuthvanadat-Pigmenten gemäss Anspruch 8 pigmentiertes hochmolekulares organisches Material.

## Claims

**1.** A process for the preparation of transparent bismuth vanadate pigments, which comprises

a) preparing an amorphous pigment precursor by customary methods by precipitation from an acid bismuth salt solution and a vanadate solution, which solutions may contain dissolved metal salts, metal oxides or nonmetal oxides,

b) coating the amorphous pigment precursor thus obtained with 1 to 50 % by weight, based on the total amount, of an inorganic coating material customary for coating pigments and selected from the group consisting of phosphates and pyrophosphates, hydroxides, oxides and water-containing oxides, and also carbonates, nitrates, fluorides, fluorosilicates, molybdates and sulfates, or a mixture thereof and subsequently

c) heat treating it at temperatures from 50 to 800°C by customary methods and then deagglomerating it.

**2.** A process according to claim 1, wherein the coating (b) is carried out using 10 to 30 % by weight of coating material, based on the total amount.

**3.** A process according to claim 1, which comprises using hydroxides or phosphates of zinc or aluminium, or a mixture thereof.

**4.** A process according to claim 3, which comprises using phosphates of zinc or aluminium, or a mixture thereof.

**5.** A process according to claim 1, which comprises thoroughly dispersing the pigment precursor in a conventional disperser during or after precipitation in the reaction solution and prior to the coating procedure (b).

**6.** A process according to claim 1, which comprises thoroughly dispersing the product obtained in the coating procedure (b) in a conventional disperser during or after the addition of the coating composition and prior to the heat treatment.

**7.** A process according to claim 1, which comprises removing the coating after the calcination (c) by treatment with an acid or base.

**8.** A bismuth vanadate pigment of the general composition

$$Bi_2O_3 \text{ x } V_2O_5,$$

wherein bismuth and vanadium may be partially replaced with other metals or nonmetals, obtainable by a process according to any one of claims 1 to 7, wherein the pigment has a transparency of $\Delta L^*>4$ in an alkyd melamine paint application at a pigment content of 38 % and at a layer thickness, dry, of 40 μm.

**9.** A bismuth vanadate pigment according to claim 8, wherein the metals and nonmetals which can partially replace bismuth and vanadium are Li, Mg, Zn, Al and Ca, and also W, P and Mo.

**10.** A bismuth vanadate pigment according to claim 8, which is a bismuth vanadate based on the C.I. Pigment Yellow 184 types.

**11.** A high molecular weight organic material pigmented with a bismuth vanadate pigment according to claim 8.

**Revendications**

**1.** Procédé pour la préparation de pigments de vanadate de bismuth transparents, **caractérisé en ce que**

a) on prépare un précurseur de pigment amorphe selon des méthodes générales courantes par précipitation à partir d'une solution acide de sel de bismuth et d'une solution de vanadate, qui peuvent renfermer dissous des sels métalliques, des oxydes métalliques ou des oxydes de métalloïdes,
b) on revêt le précurseur de pigment amorphe ainsi obtenu de 1 à 50 % en masse, par rapport à la quantité totale, d'une matière de revêtement inorganique usuelle pour le revêtement de pigments, prise dans le groupe comprenant des phosphates et pyrophosphates, des hydroxydes, des oxydes et oxydes hydratés, ainsi que des carbonates, des nitrates, des fluorures, des fluorosilicates, des molybdates et sulfates ou leurs mélanges, et ensuite
c) on traite par voie thermique à une température de 50 à 800°C selon des méthodes généralement connues et ensuite on le désagglomère.

**2.** Procédé selon la revendication 1, **caractérisé en ce que** le revêtement(b) est réalisé avec 10 à 30 % en masse de matière de revêtement, par rapport à la quantité totale.

**3.** Procédé selon la revendication 1, **caractérisé en ce qu'**on utilise des hydroxydes ou phosphates de zinc ou d'aluminium ou leurs mélanges.

**4.** Procédé selon la revendication 3, **caractérisé en ce qu'**on utilise les phosphates de zinc ou d'aluminium ou leurs mélanges.

**5.** Procédé selon la revendication 1, **caractérisé en ce qu'**on disperse à fond le précurseur de pigment au cours ou après la précipitation dans la solution réactionnelle, avant le processus de revêtement (b), dans un appareil dispersant courant.

**6.** Procédé selon la revendication 1, **caractérisé en ce qu'**on disperse le produit formé dans l'opération de revêtement (b) au cours ou après l'ajout de l'agent de revêtement, avant le traitement thermique, dans un appareil à disperser courant.

**7.** Procédé selon la revendication 1, **caractérisé en ce qu'**on élimine le revêtement après la calcination (c) par traitement par un acide ou base.

**8.** Pigments de vanadate de bismuth de composition générale

$$Bi_2O_3 \text{ x } V_2O_5,$$

le bismuth et le vanadium pouvant être partiellement remplacés par d'autres métaux ou métalloïdes, que l'on obtient selon le procédé selon le procédé de l'une des revendications 1 à 7, **caractérisés en ce qu'**ils présentent une transparence ΔL* >4 dans une application de vernis d'alkyde-mélamine pour un taux de pigment de 38 % avec une épaisseur de couche à sec de 40 μm.

9. Pigments de vanadate de bismuth selon la revendication 8, **caractérisés en ce qu'**il s'agit pour les métaux et métalloïdes, qui peuvent remplacer partiellement ou entièrement le bismuth et le vanadium, de Li, Mg, Zn, Al et Ca, ainsi que de W, P et Mo.

10. Pigments de vanadate de bismuth selon la revendication 8, **caractérisés en ce qu'**il s'agit de vanadates de bismuth à base de types de C. I. Pigment Yellow 184.

11. Matière organique de haute masse moléculaire pigmentée par les pigments de vanadate de bismuth selon la revendication 8.